# EUROPÄISCHE PATENTSCHRIFT

(11) **EP 3 544 416 B1**
(45) Veröffentlichungstag und Bekanntmachung des Hinweises auf die Patenterteilung: **13.07.2022**
(21) Anmeldenummer: 17804837.7
(22) Anmeldetag: 16.11.2017
(51) Int. Cl.: A01M 7/00

(54) **APPLIKATION VON FLÜSSIGKEITEN**
APPLICATION OF LIQUIDS
APPLICATION DE LIQUIDES

(30) Priorität: 23.11.2016 EP 16200158
(43) Veröffentlichungstag der Anmeldung: 02.10.2019
(73) Patentinhaber: BASF Agro Trademarks GmbH, 67056 Ludwigshafen am Rhein (DE)
(72) Erfinder: WAHABZADA, Mirwaes, 53117 Bonn (DE); PETERS, Ole, 40217 Düsseldorf (DE); MAYER, Walter, 42113 Wuppertal (DE); GRIMMIG, Bernhard, 27283 Verden (DE)
(74) Vertreter: BASF IP Association
(86) Internationale Anmeldenummer: PCT/EP2017/079437
(87) Internationale Veröffentlichungsnummer: WO 2018/095800

(56) Entgegenhaltungen:
- EP-A1- 1 378 293
- WO-A1-2013/063415
- DE-A1-102004 047 585
- FR-A1- 3 003 187

## Beschreibung

Die vorliegende Erfindung befasst sich mit der Applikation eines Konzentrats oder mehreren Konzentraten in verdünnter Form. Gegenstände der vorliegenden Erfindung sind eine Vorrichtung und ein Verfahren zur Applikation eines oder mehrerer Konzentrate in verdünnter Form. Ein weiterer Gegenstand der vorliegenden Erfindung ist die Verwendung der erfindungsgemäßen Vorrichtung im Bereich der Landwirtschaft, insbesondere zur Behandlung von Kulturpflanzen mit Pflanzenschutzmitteln und/oder Nährstoffen.

Pflanzenschutzmittel werden weltweit eingesetzt, um Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise die Lebensvorgänge von Pflanzen zu beeinflussen (z.B. Wachstumsregler). Somit dienen Pflanzenschutzmittel einer Ertragsabsicherung bzw. Ertragssteigerung von landwirtschaftlichen Pflanzenerzeugnissen.

Pflanzenschutzmittel unterliegen dabei Anwendungseinschränkungen, die sich auf den Ausbringungszeitpunkt, Ausbringungsort und Ausbringungszweck beziehen können. Grundsätzlicher Bestandteil einer Anwendungsbestimmung sind die zugelassene Menge je Flächeneinheit sowie die Kultur oder Nichtkultur, die zum Zeitpunkt der Anwendung auf der entsprechenden Fläche sein darf. Daneben ist das Ziel (die Indikation), welches bekämpft werden soll und damit vorhanden sein muss, notwendiges Kriterium für eine Anwendung auf der entsprechenden Fläche.

Ein Problem beim Pflanzenschutz stellt die Gefahr von Resistenzbildungen z.B. bei Insekten, Unkräutern und Pilzen gegenüber einzelnen Wirkstoffen dar.

Demnach sollten Pflanzenschutzmittel nur bei Bedarf und nur in den Mengen eingesetzt werden, die jeweils nötig sind. Ein wichtiger Baustein im Resistenzmanagement ist der Wechsel der eingesetzten Wirkstoffe. Gerade hierfür ist eine Dokumentation der eingesetzten Wirkstoffe und der Mengen wichtig.

Auch der Nähstoffbedarf von Pflanzen kann lokal unterschiedlich sein. Zum einen kann es sein, dass die Bodenverhältnisse räumlich variieren und deswegen einige Bereiche über weniger Nährstoffe verfügen als andere. Auch eine historisch unterschiedliche Nutzung von Teilflächen kann zu unterschiedlichen Nährstoffverteilungen führen. Zum anderen kann es sein, dass in einigen Bereichen die angebauten Kulturpflanzen unterentwickelt sind (z.B. infolge von lokalen Witterungsschäden) und es sich aus wirtschaftlichen Gründen nicht lohnt, in diese Bereiche überhaupt oder im selben Maße wie auf den guten Teilbereichen zu investieren, weswegen der Einsatz von Nährstoffen hier verringert werden kann oder gar unrentabel ist.

Unter dem Stichwort Präzisionslandwirtschaft (engl.: *precision farming*) wird eine ortsdifferenzierte und zielgerichtete Bewirtschaftung landwirtschaftlicher Nutzflächen verstanden. Ziel ist es, die Unterschiede des Bodens bzw. des Versorgungsgrades der Pflanzen und somit die Ertragsfähigkeit innerhalb eines Feldes zu berücksichtigen.

Zum gezielten Einsatz von Pflanzenschutzmitteln und Nährstoffen sind in den vergangenen Jahren verschiedene Ansätze veröffentlicht worden.

Die Offenlegungsschrift WO95/01719 beschreibt beispielsweise ein Computersystem, mit dem ein Feld zunächst in mehrere Zonen aufgeteilt wird, die unabhängig voneinander überwacht werden. Eine Bewässerung und der Einsatz von "Chemikalien" erfolgen dann zonenweise in Abhängigkeit der Bedürfnisse, die durch die Überwachung ermittelt werden.

WO00/23937 beschreibt ebenfalls ein Computersystem. Teil des Computersystems ist eine digitale Karte eines Ackerfelds, die auf einer fotografischen Aufnahme beruht und die geografische Längen- und Breitenangaben enthält, so dass eine Positionsbestimmung möglich ist. In dieser digitalen Karte kann ein Anwender Zonen definieren. Den Zonen kann der Anwender Formulierungen von Substanzen (Dünger, Pflanzenschutzmittel) und zu applizierende Mengen dieser Substanzformulierungen zuordnen. Das Computersystem erzeugt daraufhin eine sogenannte Applikationskarte. Diese Applikationskarte ermöglicht es einem Landwirt bei der Ausbringung der Substanzen die verschiedenen Zonen des Ackerlands entsprechend zu berücksichtigen und die den einzelnen Zonen zuvor zugeordneten Mengen an entsprechenden Formulierungen zu applizieren. Dieses Verfahren kann als Offline-Verfahren bezeichnet werden; es wird zunächst eine Applikationskarte erstellt, die dann offline im Feld verwendet wird.

WO2008/097283A1 offenbart eine Vorrichtung zur Applikation von Pflanzenschutzmitteln und/oder Nährstoffen, die über einen Sensor verfügt, mit dem der lokale Bedarf von Pflanzen im Feld ermittelt werden kann. Während sich die Vorrichtung durch das Feld bewegt, wird der Bedarf lokal ermittelt und es werden diejenigen Mengen an Pflanzenschutzmitteln und/oder Nährstoffen appliziert, die nötig sind, um den ermittelten Bedarf zu befriedigen. Dieses Verfahren kann als Online-Verfahren bezeichnet werden. Da die Mengen an zu applizierenden Pflanzenschutzmitteln und/oder Nährstoffen vorab nicht bekannt sind, müssen ggf. größere Mengen mitgeführt werden, um zu verhindern, dass die mitgeführten Mengen nicht ausreichen, um den ermittelten Bedarf zu befriedigen. Gerade in einem solchen Fall können Restmengen anfallen.

Zur Applikation von Pflanzenschutzmitteln und Nährstoffen werden Landmaschinen eingesetzt, die üblicherweise über einen Tank verfügen, in dem das/die Pflanzenschutzmittel und/oder der/die Nährstoff/e gelagert wird/werden. Mittels einer Pumpe wird der Tankinhalt zu einer oder mehreren Düsen transportiert, über die der Tankinhalt appliziert wird, während sich die Landmaschine über das Feld bewegt (siehe z.B.: US2014/0263731A1). Die Pflanzenschutzmittel werden dabei nicht unverdünnt sondern durch Wasser oder Nährstoffe (Flüssigdünger) verdünnt ausgebracht. Daher ist bei dem Ausbringen von Pflanzenschutzmitteln der überwiegende Teil des Tankinhalts Wasser. Flüssigdünger werden entweder dazu gemischt, in manchen Fällen aber auch unverdünnt ausgebracht.

Eine solche Applikationsvorrichtung ist jedoch sehr unflexibel, da nur die zuvor angesetzte Mischung (Tankinhalt) vorhanden ist.

DE102010018338A1 offenbart eine Sprühvorrichtung zur Aufbringung von Sprühmittel auf Pflanzen, die einen Sprühmittelbehälter und einen Zusatzsprühmittelbehälter umfasst. Das Zusatzsprühmittel kann mittels einer Dosierpumpe in das Sprühmittel eingebracht werden, so dass je nach Bedarf nur Sprühmittel oder Sprühmittel inklusive Zusatzsprühmittel appliziert werden können. Ein Problem der in DE102010018338A1 offenbarten Applikationsvorrichtung besteht darin, dass in den Leitungen große Restmengen an Sprühmittel und Zusatzsprühmittel verbleiben. Restmengen müssen gegebenenfalls entsorgt werden; der Reinigungsaufwand der Leitungen ist nicht unerheblich und große Restmengen bedeuten üblicherweise unnötige Kosten. US2014/0252111A1 offenbart eine Applikationsvorrichtung, die neben einem Produkttank einen Tank mit einem Spülmittel umfasst. Die Vorrichtung ist so ausgestaltet, dass nach der Applikation eines Produkts die Leitungen mit dem Spülmittel gespült werden können. Restmengen werden dabei fortgespült und weder aufgefangen noch wiederverwendet.

Die EP1 378 293 A1 offenbart ein gattungsmäßiges Verfahren bzw. eine entsprechende Vorrichtung zur direkten Einspritzung und Dosierung von Sprühmittel.

Ausgehend vom beschriebenen Stand der Technik stellt sich einem Fachmann damit die technische Aufgabe, eine Applikationsvorrichtung bereitzustellen, die eine teilflächenspezifische Applikation von einem oder mehreren Pflanzenschutzmitteln und/oder Nährstoffen ermöglicht, und bei der Restmengen und der Reinigungsaufwand minimiert werden.

Diese Aufgabe wird durch die Gegenstände der unabhängigen Ansprüche 1, 12 und 15 gelöst. Bevorzugte Ausführungsformen können den abhängigen Ansprüchen sowie der nachfolgenden Beschreibung entnommen werden.

Ein erster Gegenstand der vorliegenden Erfindung ist somit ein Verfahren zur Applikation eines Konzentrats in verdünnter Form, umfassend die Schritte gemäß Anspruch 1.

Ein weiterer Gegenstand der vorliegenden Erfindung ist eine Vorrichtung zur Applikation eines Konzentrats in verdünnter Form gemäß Anspruch 12.

Ein weiterer Gegenstand der vorliegenden Erfindung betrifft die Verwendung der erfindungsgemäßen Vorrichtung im Bereich der Landwirtschaft, insbesondere zur Behandlung von Kulturpflanzen mit Pflanzenschutzmitteln und/oder Nährstoffen.

Die Erfindung wird nachstehend näher erläutert, ohne zwischen den Erfindungsgegenständen (Vorrichtung, Verfahren, Verwendung) zu unterscheiden. Die nachfolgenden Erläuterungen sollen vielmehr für alle Erfindungsgegenstände in analoger Weise gelten, unabhängig davon, in welchem Kontext (Vorrichtung, Verfahren, Verwendung) sie erfolgen.

Erfindungsgemäß liegen ein oder mehrere Pflanzenschutzmittel und/oder Nährstoffe in konzentrierter Form (als Konzentrat) vor, bevor sie mit einem Verdünnungsmittel verdünnt und in verdünnter Form appliziert werden.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler).

Beispiele für Pflanzenschutzmittelgruppen sind Herbizide, Fungizide, Insektizide und Wachstumsregler.

Ein Pflanzenschutzmittel enthält üblicherweise einen Wirkstoff oder mehrere Wirkstoffe. Als "Wirkstoffe" werden Substanzen bezeichnet, die in einem Organismus eine spezifische Wirkung haben und eine spezifische Reaktion hervorrufen. Üblicherweise enthält ein Pflanzenschutzmittel einen Trägerstoff zum Verdünnen des einen oder der mehreren Wirkstoffe. Daneben sind Additive wie Konservierungsmittel, Puffer, Farbstoffe und dergleichen denkbar.

Wachstumsregler dienen zum Beispiel der Erhöhung der Standfestigkeit bei Getreide durch Verkürzung der Halmlänge (Halmverkürzer oder besser Internodienverkürzer), Verbesserung der Bewurzelung von Stecklingen, Verringerung der Pflanzenhöhe durch Stauchung im Gartenbau oder der Verhinderung der Keimung von Kartoffeln. Es sind üblicherweise Phytohormone oder deren synthetischen Analoge.

Unter dem Begriff "Nährstoffe" werden diejenigen anorganischen und organischen Verbindungen verstanden, denen Pflanzen die Elemente entnehmen können, aus denen ihre Körper aufgebaut sind. Als Nährstoffe werden oft auch diese Elemente selbst bezeichnet. Je nach dem Standort der Pflanze werden die Nährstoffe aus der Luft, dem Wasser und dem Boden entnommen. Dabei handelt es sich meistens um einfache anorganische Verbindungen wie Wasser (H₂O) und Kohlendioxid (CO₂) sowie Ionen wie Nitrat (NO₃⁻), Phosphat (PO₄³⁻) und Kalium (K⁺). Die Verfügbarkeit der Nährstoffe ist unterschiedlich. Sie hängt vom chemischen Verhalten des Nährstoffs und von den Standortbedingungen ab. Da die Nährstoff-Elemente in einem bestimmten Mengenverhältnis benötigt werden, begrenzt meist die Verfügbarkeit eines Elementes das Wachstum der Pflanzen (Minimumgesetz ausführend beschrieben durch Justus von Liebig). Führt man dieses Element zu, steigert sich das Wachstum. Lebensnotwendig sind neben den Kernelementen der organischen Substanz (C, O, H, N und P) noch K, S, Ca, Mg, Mo, Cu, Zn, Fe, B, Mn, Cl bei höheren Pflanzen, Co, Ni. Für die einzelnen Nährstoffe können verschiedene Verbindungen vorliegen, so kann beispielsweise Stickstoff als Nitrat, Ammonium oder Aminosäure zugeführt werden.

Ein zu applizierendes Pflanzenschutzmittel und/oder ein zu applizierender Nährstoff werden in dieser Beschreibung auch als Applikationsmittel bezeichnet.

Das Applikationsmittel liegt zunächst als Konzentrat in einem Behälter vor. Das Konzentrat ist vorzugsweise flüssig.

Beim Konzentrat handelt es sich vorzugsweise um ein Wirkstoffkonzentrat. Unter Wirkstoffkonzentrat wird eine Formulierung eines Wirkstoffs verstanden, die in konzentrierter Form vorliegt und vor ihrer Verwendung verdünnt werden muss/sollte.

Vorzugsweise umfasst die erfindungsgemäße Vorrichtung mehrere Behälter mit jeweils einem Konzentrat. Vorzugsweise liegen 1 bis 10 Behälter mit Konzentraten vor.

In jedem Behälter kann ein unterschiedliches Konzentrat enthalten sein; es ist aber auch denkbar dass in mehreren Behältern das gleiche Konzentrat enthalten ist.

Vorzugsweise liegt das Konzentrat in einer auswechselbaren Kartusche vor. In einem solchen Fall weisen die Kartusche und die Vorrichtung zueinander kompatible Mittel auf, mit denen die Kartusche reversibel an die Vorrichtung angeschlossen werden kann, so dass das in der Kartusche enthaltende Konzentrat aus der Kartusche in die Vorrichtung gefördert werden kann. Solche Mittel können beispielsweise eine Schraub- oder Bajonettverbindung sein.

Die Kartusche ist austauschbar, das heißt, sie kann an das Sprühgerät angeschlossen und wieder entfernt werden. Sie wird vorzugsweise dann wieder entfernt und ggf. durch eine andere oder neue Kartusche ersetzt, wenn sie entleert worden ist. Sie kann jedoch auch dann entfernt werden, wenn diese noch nicht entleert ist. Sowohl Kartusche als auch die Vorrichtung sind als Funktionseinheiten so ausgelegt, dass eine für Anwender und Umwelt sichere Benutzung gegeben ist.

Die Kartusche ist so ausgeführt, dass sie für das Konzentrat undurchlässig ist und durch das Konzentrat nicht chemisch angegriffen wird.

Vorzugsweise ist die Kartusche zumindest teilweise aus Kunststoff ausgeführt. Kunststoffe sind dafür bekannt, dass sie vielen Stoffen gegenüber chemisch inert sind. Sie sind zudem leicht, lassen sich gut verarbeiten und in nahezu beliebige Formen bringen.

Die Kartusche kann als Einwegbehälter oder Mehrwegbehälter ausgeführt sein, d.h. in einer Ausführungsform der vorliegenden Erfindung kann die Kartusche wieder befüllt werden, in einer alternativen Ausführungsform wird sie nach der Entleerung entsorgt.

Erfindungsgemäß weist der Konzentratbehälter eine Speichereinheit auf. In der Speichereinheit können Informationen zu dem in dem Konzentratbehälter enthaltenden Konzentrat und zu dessen Verwendung gespeichert sein. Beispielsweise kann gespeichert sein, mit welchem Verdünnungsmittel das Konzentrat verdünnt werden sollte, in welchem Verdünnungsgrad das Konzentrat mit Verdünnungsmittel gemischt werden sollte und/oder mit welchem Spülmittel die Konzentratleitungen gespült werden sollten. Auch können die maximalen Mengeneinheiten je Flächeneinheit in Abhängigkeit der Kultur und der Indikation gespeichert sein, sodass eine Fehlanwendung unter sachgemäßer Verwendung ausgeschlossen werden kann.

Bei der Speichereinheit kann es sich um einen optischen Code (Barcode, 2D-Code oder Ähnliches) handeln.

Vorzugsweise handelt es sich um eine Speichereinheit, deren Inhalt veränderbar ist, d.h., dass Informationen nicht nur aus der Speichereinheit gelesen sondern auch in die Speichereinheit geschrieben werden können. Beispiele für beschreibbare Speicher sind Magnetspeicher und Halbleiterspeicher. Vorzugsweise handelt es sich bei der Speichereinheit um einen Halbleiterspeicher.

Das Auslesen und/oder Beschreiben der Speichereinheit kann kontaktlos (wie beispielsweise bei der RFID-Technologie oder der Near-Field-Kommunikation) oder kontaktbehaftet (wie beispielsweise bei einer Debit-Karte, einer CompactFlash-Karte oder einem USB-Stick) erfolgen.

Erfindungsgemäß sind Informationen zur Art und Menge des Konzentrats, das sich in dem Konzentratbehälter befindet, in der Speichereinheit gespeichert. Unter "Art" werden all diejenigen Informationen verstanden, die einen Rückschluss auf den Inhalt des Konzentratbehälters erlauben. Es kann eine Produktbezeichnung oder eine Kennnummer oder eine Identifikationsnummer für das Konzentrat gespeichert sein. Es kann die Zusammensetzung des Konzentrats gespeichert sein. Es können Informationen über den im Konzentrat enthaltenen Wirkstoff und dessen Konzentration gespeichert sein.

Vorzugsweise wird die in der Speichereinheit gespeicherte Information über die in dem Konzentratbehälter enthaltene Menge an Konzentrat aktuell gehalten. Es ist beispielsweise denkbar, dass die während eines Applikationsvorgangs aus dem Behälter entnommene Menge an Konzentrat registriert und daraus die nach dem Applikationsvorgang in dem Behälter verbliebene Restmenge berechnet und in die Speichereinheit geschrieben wird. Es ist denkbar, bei der Ermittlung der in dem Konzentratbehälter verbliebenen Restmenge diejenige Konzentratmenge zu berücksichtigen, die bei einem Spülvorgang im Anschluss an einen Applikationsvorgang in den Konzentratbehälter zurückgeführt wird.

Die erfindungsgemäße Vorrichtung umfasst ferner einen Behälter mit Verdünnungsmittel. Das Verdünnungsmittel wird verwendet, um es mit dem Konzentrat zu mischen und damit eine Verdünnung des Konzentrats zu erzielen, bevor das Konzentrat in verdünnter Form appliziert wird.

Das Verdünnungsmittel ist, so wie das Konzentrat auch, vorzugsweise eine Flüssigkeit. Der Begriff "Flüssigkeit" schließt Lösungen, Emulsionen und Suspensionen mit ein.

In einer bevorzugten Ausführungsform handelt es sich bei dem Verdünnungsmittel um Wasser.

In einer weiteren bevorzugten Ausführungsform enthält das Verdünnungsmittel einen oder mehrere Nährstoffe. Mit dem Verdünnungsmittel, das einen oder mehrere Nährstoffe enthält, wird dann das Konzentrat, das vorzugsweise einen oder mehrere Pflanzenschutzmittel enthält, verdünnt.

Es ist auch denkbar, dass die erfindungsgemäße Vorrichtung mehrere Behälter mit Verdünnungsmittel aufweist. Es ist denkbar, dass sich in mehreren Behältern das gleiche Verdünnungsmittel befindet; es ist aber auch denkbar, dass sich in jedem Behälter ein anderes Verdünnungsmittel befindet.

Es ist denkbar, dass der Verdünnungsmittelbehälter mit einer Speichereinheit ausgerüstet ist. In der Speichereinheit können Informationen über das in dem Verdünnungsmittelbehälter enthaltene Verdünnungsmittel gespeichert sein. Es können analoge oder ähnliche Informationen zum Verdünnungsmittel und dessen Verwendung in der Speichereinheit gespeichert sein, wie Informationen zum Konzentrat in der Speichereinheit des Konzentratbehälters gespeichert sind, z.B. Art, Menge, Konzentration an Inhaltstoffen, Zusammensetzung, Verwendungsbestimmungen, Verwendungsbeschränkungen, Kompatibilität zu Konzentraten und/oder Spülmitteln und dergleichen.

Die erfindungsgemäße Vorrichtung verfügt über mindestens einen Auslass. Das Konzentrat wird aus seinem Behälter in Richtung des mindestens einen Auslasses gefördert. Dazu sind Fördermittel vorhanden. Das Konzentrat kann beispielsweise mittels einer Pumpe aus seinem Behälter in Richtung Auslass gefördert werden. Ebenso ist es denkbar, dass der Konzentratbehälter einem Überdruck ausgesetzt wird, so dass das Konzentrat aus seinem Behälter in Richtung Auslass gedrückt wird.

Vorzugsweise verfügt die erfindungsgemäße Vorrichtung über mehrere Auslässe. Dabei entspricht die Anzahl der Auslässe der Anzahl der aktuell oder zukünftig gebräuchlichen Anzahl der Auslässe eines Fahrzeugs zum Ausbringen von Pflanzenschutzmitteln und/oder Nährstoffen. Die Anzahl hängt sowohl bei aktuell als auch zukünftig gebräuchlichen Fahrzeugen von der Arbeitsbreite dieser Fahrzeuge sowie den Abständen der Auslässe untereinander ab. Üblich sind 10 bis 100 Auslässe; die Anzahl kann aber auch kleiner oder größer sein. Die Auslässe werden vorzugsweise durch Sprühdüsen gebildet, mit denen das verdünnte Applikationsmittel in Tropfenform verteilt werden kann.

Vorzugsweise sind die Auslässe/Sprühdüsen an einem Verteilerarm angebracht und über die Länge des Verteilerarms gleichmäßig verteilt, so wie es bei Applikationsvorrichtungen für die Verwendung in der Landwirtschaft üblich ist (siehe z.B. US2014/0263731A1 und US2014/0252111A1).

Das Konzentrat wird in verdünnter Form appliziert. Dazu ist es erforderlich, dass das Konzentrat mit dem Verdünnungsmittel vermischt wird. Die Vermischung von Konzentrat und Verdünnungsmittel erfolgt vorzugsweise mit Hilfe eines Mischelements. Üblicherweise weist ein Mischelement einen Einlass für das Konzentrat, einen Einlass für das Verdünnungsmittel und einen Auslass für die Mischung aus Konzentrat und Verdünnungsmittel auf.

Prinzipiell ist es möglich, das Verdünnungsmittel und das Konzentrat in dem Auslass (z.B. in der Sprühdüse) zusammenzuführen. In vielen Fällen wird jedoch durch das einfache Zusammenführen von Verdünnungsmittel und Konzentrat in einer Sprühdüse keine ausreichende Vermischung der Komponenten erreicht. Vorzugsweise erfolgt die Vermischung von Verdünnungsmittel und Konzentrat daher in einer Mischkammer, die sich in Strömungsrichtung des Konzentrats und des Verdünnungsmittels vor dem Auslass befindet.

Die Mischkammer kann statische Mischelemente (Statikmischer) aufweisen, um eine verbesserte Vermischung der Komponenten zu erreichen. Ziel ist es, eine homogene Mischung aus Konzentrat und Verdünnungsmittel zu erreichen. "Homogen" bedeutet, dass zwei beliebige Stichproben der Mischung im Rahmen der Fehlergrenzen die gleiche Konzentration an Konzentrat in dem Verdünnungsmittel aufweisen.

In einer bevorzugten Ausführungsform wird das Konzentrat in den Strom des Verdünnungsmittels injiziert. Diese Direkteinspritzung bewirkt eine Verwirbelung des Konzentrats in dem Verdünnungsmittel, die zu einer verbesserten Vermischung führt.

Erfindungsgemäß sollen die nach einem Applikationsprozess in den Leitungen verbleibenden Restmengen gering gehalten werden. Insbesondere sollen die Restmengen an verdünntem Konzentrat in den Leitungen der Vorrichtung gering gehalten werden. Daher erfolgt die Vermischung des Konzentrats mit dem Verdünnungsmittel vorzugsweise in einer Mischkammer, die sich in Strömungsrichtung des Konzentrats "kurz vor dem Auslass" befindet.

"Kurz vor dem Auslass" bedeutet, dass das Leitungsvolumen zwischen Mischkammer und Auslass (Totvolumen) weniger als 200 mL beträgt, vorzugsweise beträgt es weniger als 150 mL, noch mehr bevorzugt weniger als 100 mL, noch mehr bevorzugt weniger als 80 mL, noch mehr bevorzugt weniger als 70 mL, noch mehr bevorzugt weniger als 60 mL, noch mehr bevorzugt weniger als 50 mL.

In einer bevorzugten Ausführungsform ist jedem Auslass eine Mischkammer vorgeschaltet. Es ist aber auch denkbar, Konzentrat und Verdünnungsmittel in einer zentralen Mischkammer zu vermischen und die Mischung von der zentralen Mischkammer in Richtung mehrerer Auslässe zu befördern. Denkbar ist auch, dass mehrere Mischkammern vorhanden sind, wobei von jeder einzelnen Mischkammer mehrere Auslässe versorgt werden. Weitere Varianten sind denkbar.

Falls mehrere Konzentratbehälter mit verschiedenen Konzentraten vorhanden sind, die nebeneinander appliziert werden sollen, können diese unabhängig voneinander in eine oder mehrere Mischkammern gefördert werden, wo sie gemeinsam mit dem Verdünnungsmittel vermischt werden. Ebenso ist es denkbar, dass verschiedene Konzentrate zunächst zusammengeführt und dann gemeinsam mit einem Verdünnungsmittel vermischt werden. Die Zusammenführung von verschiedenen Konzentraten kann in einer Konzentratleitung erfolgen; es ist aber auch denkbar, eine oder mehrere Mischkammern zu verwenden, in denen verschiedene Konzentrate zunächst vermischt werden, bevor sie einer oder mehreren weiteren Mischkammer zugeführt werden, in der/denen eine Verdünnung der Mischung mit einem oder mehreren Verdünnungsmitteln erfolgt.

In eine Mischkammer werden sowohl das Konzentrat als auch das Verdünnungsmittel über entsprechende Leitungen eingebracht. Die Leitungen, durch die das Konzentrat aus seinem Behälter in eine Mischkammer gelangt, werden hier auch als Konzentratleitungen bezeichnet. Entsprechend werden die Leitungen, durch die das Verdünnungsmittel aus seinem Behälter in eine Mischkammer gelangt, auch als Verdünnungsmittelleitungen bezeichnet. Wenn in dieser Beschreibung von einer "Leitung" gesprochen wird, schließt dies den Begriff "Leitungsabschnitt" mit ein. Leitung und Leitungsabschnitt werden synonym verwendet.

Nach einem Applikationsvorgang verbleiben Restmengen an Konzentrat in den Konzentratleitungen, Restmengen an Verdünnungsmittel in den Verdünnungsmittelleitungen und verdünntes Konzentrat (eine Mischung aus Konzentrat und Verdünnungsmittel) in der Mischkammer sowie in den Leitungen zwischen Mischkammer und Auslass.

Erfindungsgemäß wird zumindest ein Teil der nach einem Applikationsvorgang in den Konzentratleitungen verbliebenen Restmengen an Konzentrat in den Konzentratbehälter zurückgeführt, damit sie wiederverwendet werden können.

In einer bevorzugten Ausführungsform führen von jedem Konzentratbehälter separate Konzentratleitungen zu den Mischelementen. Da die Zusammenführung von Konzentrat und Verdünnungsmittel in den Mischelementen wie beschrieben "kurz vor einem Auslass" erfolgt, ist die Menge an verdünntem Konzentrat, das sich zwischen den Mischelementen und den Auslässen befindet, gering. Die in den Konzentratleitungen verbliebenen Restmengen sind reines Konzentrat, das in den Konzentratbehälter zurückgeführt und wiederverwendet werden kann. Die Menge hängt dabei insbesondere von der Leitungslänge ab. Der Vorgang des Zurückführens ist daher zeitlich und/oder konstruktiv an diesen Umstand angepasst. In dieser Ausführungsform werden vorzugsweise die gesamten, in den Konzentratleitungen verbliebenen Restmengen an Konzentrat in die jeweiligen Konzentratbehälter zurückgeführt.

In einer weiteren bevorzugten Ausführungsform ist es möglich, die nach einem Applikationsvorgang in den Konzentratleitungen verbliebenen Restmengen an Konzentrat in den Konzentratbehälter zurückzuführen und/oder sie in einen oder mehrere Auffangbehälter zu befördern. In diesem Fall existieren neben den Konzentratbehältern noch ein oder mehrere separate Auffangbehälter, die Konzentratrestmengen aufnehmen können. Diese Ausführungsform ist besonders vorteilhaft, wenn es mehrere Konzentratbehälter mit unterschiedlichen Konzentraten gibt und sich verschiedene Konzentrate zumindest einen Teil der Konzentratleitungen teilen (gemeinsame Konzentratleitungen). Solange während eines Applikationsvorgangs nur eine Sorte Konzentrat appliziert wird, kann dieses nach dem Applikationsvorgang in den jeweiligen Konzentratbehälter zurückgeführt werden. Werden während eines Applikationsvorgangs verschiedene Konzentrate nebeneinander appliziert, befinden sich in den gemeinsamen Konzentratleitungen Restmengen unterschiedlicher Konzentrate. Diese Gemische sollten nicht in einen Konzentratbehälter mit ansonsten reinem Konzentrat gefördert werden. Diese Gemische sollten in einen oder mehrere separate Auffangbehälter gefördert werden, um sie dort sicher zu lagern, und später gegebenenfalls aufarbeiten und wiederverwenden oder sicher entsorgen zu können.

Es ist denkbar, dass die vorhandenen Auffangbehälter ebenfalls mit einer Speichereinheit ausgerüstet sind. In die Speichereinheit können beispielsweise Informationen über die Art und Menge der in dem jeweiligen Auffangbehälter enthaltenen Konzentrate, Konzentratmischungen, Spülmittel und/oder Mischungen der genannten Substanzen gespeichert werden.

Es ist denkbar, die in einen Auffangbehälter geförderten Substanzen zu einem späteren Zeitpunkt einem Applikationsvorgang zuzuführen. In einem solchen Fall sind entsprechende Fördermittel vorhanden, um die in einem Auffangbehälter enthaltenen Substanzen in Richtung eines oder mehrerer Auslässe zu fördern.

In einer bevorzugten Ausführungsform verfügt die erfindungsgemäße Vorrichtung über einen oder mehrere Behälter mit einem oder mehreren Spülmitteln. Es ist denkbar, dass mehrere Behälter vorliegen, in denen sich dasselbe Spülmittel befindet; es ist aber auch denkbar, dass mehrere Behälter vorliegen, die unterschiedliche Spülmittel beinhalten.

Ein Spülmittel kann gasförmig oder flüssig sein.

Es ist denkbar, dass der Spülmittelbehälter mit einer Speichereinheit ausgerüstet ist. In der Speichereinheit können Informationen über das in dem Spülmittelbehälter enthaltene Spülmittel gespeichert sein. Es können analoge oder ähnliche Informationen zum Spülmittel und dessen Verwendung in der Speichereinheit gespeichert sein, wie Informationen zum Konzentrat in der Speichereinheit des Konzentratbehälters gespeichert sind, z.B. Art, Menge, Konzentration an Inhaltstoffen, Zusammensetzung, Verwendungsbestimmungen, Verwendungsbeschränkungen, Kompatibilität zu Konzentraten und/oder Verdünnungsmitteln und dergleichen.

Es ist auch denkbar, dass das Verdünnungsmittel neben der Verdünnung des Konzentrats auch zum Spülen verwendet wird. In einem solchen Fall könnte technisch gesehen auf den separaten Spülmittelbehälter oder dessen Füllung mit Spülmittel ganz oder teilweise verzichtet werden. Der Verdünnungsmittelbehälter könnte dann gleichfalls als Spülmittelbehälter fungieren.

Ein Spülmittel dient vor allem der Entfernung von Restmengen an Konzentrat aus den Konzentratleitungen. Das Spülmittel kann dementsprechend eingesetzt werden, um Konzentrat aus den Konzentratleitungen in einen Konzentratbehälter zurückzuführen und/oder um Konzentrat aus den Konzentratleitungen in einen oder mehrere separate Auffangbehälter zu befördern. In einer weiteren bevorzugten Variante wird zunächst das Konzentrat in den entsprechenden Konzentratbehälter zurückgeführt und anschließend die Konzentratleitung mit dem Spülmittel gespült, wobei dieses dann in einen separaten Auffangbehälter aufgefangen wird.

In einer bevorzugten Ausführungsform wird ein Spülmittel verwendet, um Restmengen an Konzentrat nach einem Applikationsvorgang in seinen Konzentratbehälter zurückzuführen. Dazu ist ein Spülmittelbehälter über Spülmittelleitungen mit der Konzentratleitung verbunden.

Spülmittel fließt bei einem Spülvorgang aus dem Spülmittelbehälter durch die Spülmittelleitungen in die Konzentratleitungen und befördert das in den Konzentratleitungen befindliche Konzentrat zurück in den Konzentratbehälter.

Dabei kommt es zwangsläufig zu einer mehr oder weniger ausgeprägten Durchmischung von Spülmittel und Konzentrat an der Grenzfläche zwischen Spülmittel und Konzentrat. Die Durchmischung ist in der Regel umso ausgeprägter je länger der Weg ist, den Spülmittel und Konzentrat zurücklegen, wenn das Konzentrat durch das Spülmittel zurück in den Konzentratbehälter befördert wird. Auch die Strömungsgeschwindigkeit hat einen Einfluss auf den Grad der Durchmischung; eine laminare Strömung führt beispielsweise zu einer stärkeren Durchmischung als eine Pfropfenströmung.

Bei der Rückführung von Konzentrat aus den Konzentratleitungen in den Konzentratbehälter mittels eines Spülmittels gibt es verschiedene Möglichkeiten der Prozessführung, die nachfolgend näher beschrieben werden, und die jede für sich eine Ausführungsform der vorliegenden Erfindung darstellt.

In einem Fall liegen mehrere Konzentratbehälter mit verschiedenen Konzentraten nebeneinander vor. Die Konzentrate teilen sich einige Konzentratleitungen (gemeinsame Konzentratleitungen). Es wurde nur ein Konzentrat appliziert. Der Applikationsvorgang ist abgeschlossen; in den Konzentratleitungen verbleiben nur Restmengen des einen Konzentrats. Das Spülmittel wird nur soweit in die Konzentratleitungen eingebracht, als dass die in den gemeinsamen Konzentratleitungen verbliebenen Restmengen an Konzentrat aus diesen entfernt werden. Dabei wird das in den gemeinsamen Konzentratleitungen verbliebene Konzentrat zunächst in die Konzentratleitungen befördert, die sich das Konzentrat nicht mit anderen Konzentraten teilt (alleinige Konzentratleitungen), und von dort weiter in den Konzentratbehälter befördert. Je nach Volumen der alleinigen und der gemeinsamen Konzentratleitungen und Grad der Durchmischung von Konzentrat und Spülmittel ist es denkbar, dass bei diesem Vorgang kein Spülmittel in den Konzentratbehälter gelangt. Die gemeinsamen Konzentratleitungen sind frei von Konzentrat und es ist möglich, einen Applikationsvorgang mit einem anderen Konzentrat zu starten, ohne dass dabei Reste von dem vorherigen Konzentrat mit appliziert werden. Lediglich in der alleinigen Konzentratleitung verbleibt eine Mischung aus Spülmittel und Konzentrat. Bei einer erneuten Applikation des ersten Konzentrats wird zunächst die Mischung aus Spülmittel und Konzentrat aus der Konzentratleitung in Richtung Auslass befördert. Da die verschiedenen Leitungsvolumina bekannt sind, lässt sich die Menge an Spülmittel, die sich in der alleinigen Konzentratleitung befindet, berechnen, so dass diese Menge berücksichtigt werden kann, wenn der Verdünnungsgrad von Konzentrat im Verdünnungsmittel eingestellt wird. Es ist denkbar, die Information darüber, wieviel Spülmittel und Konzentrat in der Konzentratleitung verblieben sind, nach dem Applikationsvorgang in eine Speichereinheit, vorzugsweise in die Speichereinheit des Konzentratbehälters zu schreiben, damit diese Information bei einem späteren Applikationsvorgang zur korrekten Einstellung des Verdünnungsgrads verwendet werden kann. Es ist aber auch denkbar, dass das Konzentrat aus den Konzentratleitungen zurück in die Kartusche befördert wird, und anschließend die Konzentratleitungen mit einem Spülmittel gereinigt werden, wobei die dabei entstehende Mischung aus Spülmittel und Konzentratrestmengen in einen oder mehrere Auffangbehälter gefördert wird.

In einem anderen Fall können ein oder mehrere Konzentratbehälter mit einem oder mehreren Konzentraten nebeneinander vorliegen. Es wurde nur ein Konzentrat appliziert. Der Applikationsvorgang ist abgeschlossen; in den Konzentratleitungen verbleiben Restmengen an dem einen Konzentrat. Spülmittel wird verwendet, um die Konzentratleitungen von Konzentrat zu befreien. Das Spülmittel wird aus dem Spülmittelbehälter durch die Spülmittelleitungen befördert und gelangt in die Konzentratleitungen. Mit Hilfe des Spülmittels wird das in den Konzentratleitungen befindliche Konzentrat zurück in den entsprechenden Konzentratbehälter befördert. Dabei kommt es zu einer mehr oder weniger ausgeprägten Durchmischung von Konzentrat und Spülmittel an der Grenzfläche zwischen Konzentrat und Spülmittel. In diesem Fall ist es aber das Ziel, die gesamte Restmenge an Konzentrat in den Konzentratbehälter zurückzuführen. Dabei gelangt Spülmittel in den Konzentratbehälter. Die Menge an Spülmittel, die bei einem Spülvorgang in den Konzentratbehälter gelangt, wird ermittelt. Diese Menge führt zu einer Änderung der Zusammensetzung des Konzentrats im Konzentratbehälter und damit zu einer veränderten Konzentration an z.B. dem im Konzentrat enthaltenden Wirkstoff. Vorzugsweise wird die geänderte Zusammensetzung des Konzentrats ermittelt und in eine Speichereinheit geschrieben, vorzugsweise in die Speichereinheit, die mit dem Konzentratbehälter verbunden ist. Dadurch ist es möglich, die geänderte Zusammensetzung bei einem späteren Applikationsvorgang zur Einstellung des Verdünnungsgrades des Konzentrats mit Verdünnungsmittel zu berücksichtigen. Dabei ist das verwendete Spülmittel auf das jeweilige Konzentrat abgestimmt. Eine eventuelle kurz-, mittel- oder langfristige Entmischung im Konzentratbehälter wird konstruktiv berücksichtigt, sodass bei erneuter Verwendung des dann mehr oder weniger verdünnten Konzentrats eine homogene Mischung aus Konzentrat und Spülmittel zur Mischkammer gefördert wird.

In einem weiteren Fall liegen ebenfalls mehrere Konzentratbehälter mit verschiedenen Konzentraten nebeneinander vor. Die Konzentrate teilen sich einige Konzentratleitungen/Leitungsabschnitte (gemeinsame Konzentratleitungen); es gibt aber auch Konzentratleitungen (Leitungsabschnitte), die nur für jeweils ein Konzentrat bestimmt sind (alleinige Konzentratleitungen). Es wurden mehrere Konzentrate nebeneinander appliziert. Der Applikationsvorgang ist abgeschlossen; in den gemeinsamen Konzentratleitungen verbleiben Restmengen verschiedener Konzentrate. In den alleinigen Konzentratleitungen verbleiben Restmengen der jeweiligen reinen Konzentrate. Spülmittel wird verwendet, um die gemeinsamen Konzentratleitungen von Konzentratrestmengen zu befreien. Um die Konzentratbehälter nicht mit fremden Konzentraten zu verunreinigen, werden die in den gemeinsamen Konzentratleitungen verbliebenen Restmengen in einen oder mehrere separate (von den Konzentratbehältern verschiedene) Auffangbehälter befördert. Die in den alleinigen Konzentratleitungen befindlichen Restmengen an Konzentrat werden mit dem Spülmittel zurück in die jeweiligen Konzentratbehälter befördert.

Mischformen der genannten Fälle sind ebenfalls denkbar und auch Gegenstand der vorliegenden Erfindung.

Insbesondere für den Fall, dass das Spülmittel in einen Konzentratbehälter gelangt, muss es mit dem Konzentrat kompatibel sein, d.h., es sollte lediglich zu einer Verdünnung des Konzentrats in dem Konzentratbehälter führen. Es darf beispielsweise nicht dazu führen, dass ein im Konzentrat enthaltener Wirkstoff ausfällt. In einer bevorzugten Ausführungsform handelt es sich bei dem Spülmittel um Wasser. In einer anderen bevorzugten Ausführungsform stellt das Konzentrat eine Wirkstoffformulierung dar und bei dem Spülmittel handelt es sich zumindest teilweise um die gleichen Substanzen, die zur Erzeugung der Wirkstoffformulierung eingesetzt worden sind, wobei (natürlich) der Wirkstoff fehlt.

In einer bevorzugten Ausführungsform wird als ein Spülmittel Luft, Stickstoff oder ein anderes Gas oder Gasgemisch verwendet. Mittels des gasförmigen Spülmittels werden die Konzentratleitungen von Konzentratrestmengen befreit. Dabei wird zumindest ein Teil der Konzentratrestmengen in den jeweiligen Konzentratbehälter, aus dem das Konzentrat entnommen worden ist, zurückgeführt. Es ist denkbar, zunächst ein gasförmiges Spülmittel einzusetzen, um Konzentratrestmengen in die jeweiligen Konzentratbehälter zurückzuführen, und anschließend die Konzentratleitungen mittels eines flüssigen Spülmittels zu spülen/reinigen, um an den Wänden der Leitungen verbliebene Restmengen zu entfernen. Es ist denkbar, dass bei dem Vorgang gasförmiges Spülmittel in einen Konzentratbehälter gelangt. Vorzugsweise verfügt der Konzentratbehälter daher über Mittel, das gasförmige Spülmittel über ein Ventil wieder abzugeben, z.B. durch einen Wäscher (zur Entfernung von Restmengen an Konzentrat, falls sich ein Aerosol aus Spülmittel und Konzentrat gebildet hat) an die Umgebung. Die Verwendung eines gasförmigen Spülmittels zur Rückführung von Konzentratrestmengen aus den Konzentratleitungen in die jeweiligen Konzentratbehälter hätte den Vorteil, dass es zu keiner Verdünnung des Konzentrats in dem Konzentratbehälter kommt, wenn das gasförmige Spülmittel sich nicht in signifikantem Ausmaß in dem Konzentrat löst.

In einer Ausführungsform sind die Spülmittelleitungen mit den Konzentratleitungen ggf. über ein oder mehrere Ventile verbunden. Die Spülmittelleitungen treffen vorzugsweise in der Nähe des Auslasses und/oder der Mischkammer auf die Konzentratleitungen.

In einer weiteren Ausführungsform sind die Spülmittelleitungen mit den Mischkammern ggf. über ein oder mehrere Ventile verbunden. Vorzugsweise kann das Spülmittel dazu verwendet werden, sowohl die Mischkammer als auch die Konzentratleitungen von Konzentratrestmengen zu befreien.

In einer weiteren Ausführungsform führt in jede vorhandene Mischkammer eine Spülmittelleitung.

In einer weiteren Ausführungsform führen Spülmittelleitungen ggf. über ein oder mehrere Ventile in die Konzentratleitungen, wobei die Zahl der Spülmittelleitungen, die auf eine oder mehrere Konzentratleitungen treffen, mit der Zahl der vorhandenen Konzentratbehälter übereinstimmt.

In einer weiteren bevorzugten Ausführungsform verfügt die erfindungsgemäße Vorrichtung über Mittel zur Erfassung der Art und Menge an appliziertem Konzentrat/Applikationsmittel, insbesondere, wenn es sich bei dem Konzentrat/Applikationsmittel um ein Pflanzenschutzmittel handelt. Es ist denkbar, dass der Landwirt gefordert ist, die ausgebrachten Mengen an Pflanzenschutzmitteln zu protokollieren. Vorzugsweise werden diese Mengen automatisch erfasst und in eine Speichereinheit geschrieben, die vorzugsweise an ein Computernetzwerk angeschlossen ist, damit die protokollierten Daten weiterverarbeitet und ggf. auf elektronischem Weg an Behörden weitergeleitet werden können.

Die Erfindung wird nachfolgend durch Beispiele näher erläutert, ohne die Erfindung auf die Beispiele beschränken zu wollen.

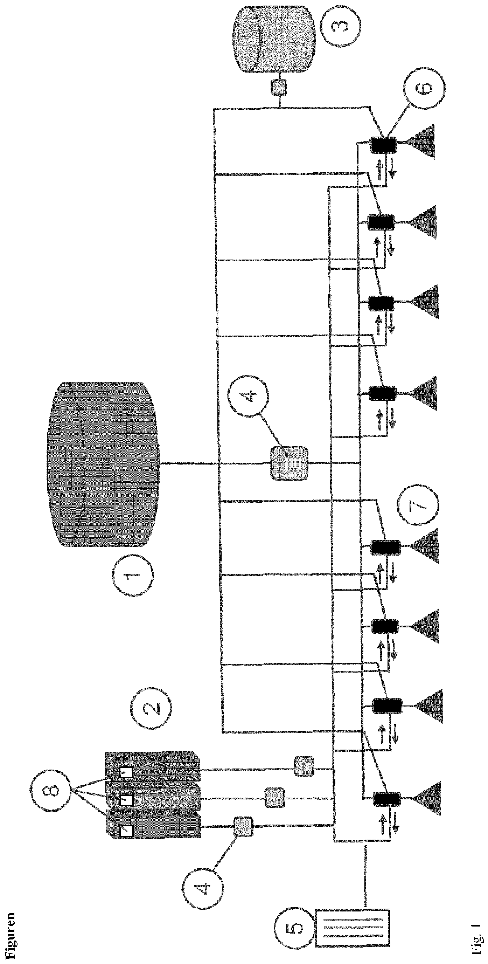

Figur 1 zeigt schematisch eine bevorzugte Ausführungsform einer erfindungsgemäßen Vorrichtung. Die Vorrichtung umfasst einen Behälter (1) mit Verdünnungsmittel. Es sind drei Konzentratbehälter (2) vorhanden, die unterschiedliche Konzentrate enthalten. Die Konzentratbehälter (2) verfügen jeweils über eine Speichereinheit (8). Ferner gibt es einen Spülmittelbehälter (3) mit Spülmittel. Der Verdünnungsmittelbehälter (1) ist über Verdünnungsmittelleitungen mit acht Mischkammern (6) verbunden. Die Konzentratbehälter (2) sind über Konzentratleitungen ebenfalls mit den acht Mischkammern (6) verbunden. Dabei gibt es Leitungsabschnitte, die sich die drei verschiedenen Konzentrate teilen (gemeinsame Konzentratleitungen (5)) und Leitungsabschnitte, die nur für jeweils ein Konzentrat bestimmt sind (alleinige Konzentratleitungen). Der Spülmittelbehälter (3) ist über Spülmittelleitungen ebenfalls mit den acht Mischkammern (6) verbunden. Die acht Mischkammern (6) führen jeweils zu einer Sprühdüse (7), mit der der Inhalt der Mischkammer in Tropfenform appliziert werden kann.

Ein oder mehrere Konzentrate können nacheinander oder gleichzeitig aus den jeweiligen Konzentratbehältern in Richtung der Mischkammern (6) befördert werden. Gleichfalls kann Verdünnungsmittel aus dem Verdünnungsmittelbehälter (1) in Richtung der Mischkammern (6) befördert werden. Das oder die Konzentrate werden in den Mischkammern (6) in den Strom des Verdünnungsmittels gespritzt, so dass sich Konzentrat und Verdünnungsmittel in den Mischkammern vermischen und eine homogene Mischung bilden. Dabei wird das Konzentrat bzw. werden die Konzentrate mit Verdünnungsmittel verdünnt. Das oder die verdünnten Konzentrate verlassen die Vorrichtung über die Sprühdüsen. Druckregler (4) sorgen dafür, dass die Mengenströme von Konzentrat und Verdünnungsmittel entsprechend dem gewünschten Verdünnungsverhältnis und dem gewünschten Auslassmengenstrom geregelt werden.

In den Speichereinheiten (8) sind die in den Konzentratbehältern enthaltenen Mengen an Konzentrat gespeichert. Werden Konzentrate den Konzentratbehältern entnommen, werden die entnommenen Mengen erfasst und die in den Konzentratbehältern verbleibenden Mengen an Konzentrat ermittelt. Die in den Konzentratbehältern verbleibenden Mengen an Konzentrat werden in die Speichermedien geschrieben.

Nach einem Applikationsvorgang verbleiben Restmengen an verdünnten Konzentraten in den Mischkammern. Es verbleiben Restmengen an Konzentrat in den alleinigen und den gemeinsamen Konzentratleitungen. Mittels Spülmittel können Konzentratrestmengen aus den Leitungen entfernt werden. Vorzugsweise wird dabei zumindest ein Teil der Konzentratrestmengen in einen oder mehrere Konzentratbehälter zurückgeführt. Die Speichermedien werden entsprechend aktualisiert, damit in den Speichermedien stets festgehalten ist, welche Konzentratmengen in den Konzentratbehältern verfügbar sind.

Die verbleibenden Restmengen in den Mischkammern und Sprühdüsen können mit dem Spülmittel in einen separaten Auffangbehälter geführt, oder sach- und fachgerecht auf dem Feld ausgebracht werden. Die Reinigung wie zuvor beschrieben verursacht jedoch deutlich geringere Restmengen, die auf dem Feld ausgebracht werden, da der Abstand zwischen einem oder mehreren Mischelementen und einem oder mehreren Auslässen (Sprühdüsen) erfindungsgemäß minimiert wird.

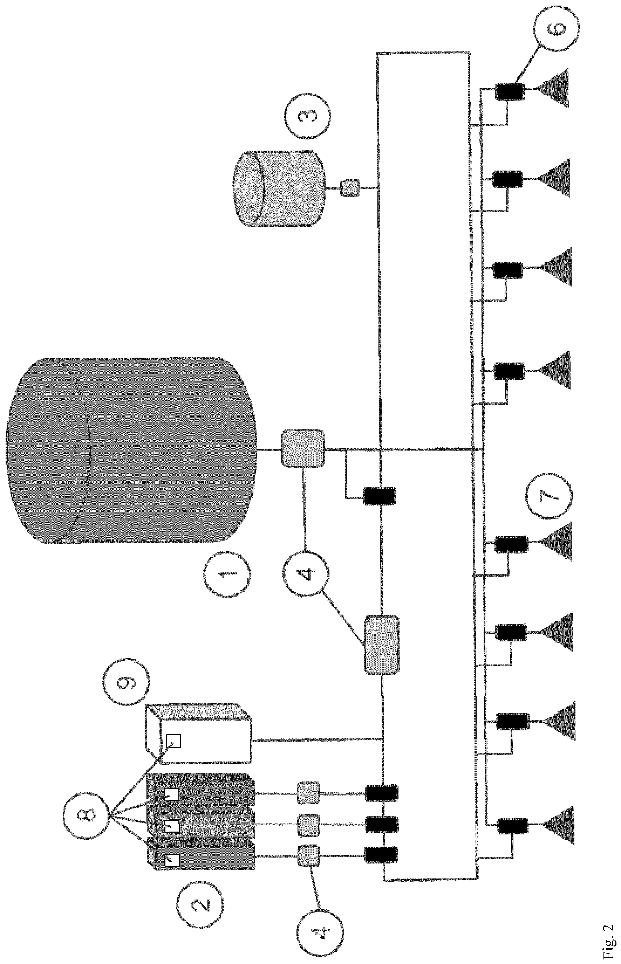

Figur 2 zeigt schematisch eine weitere bevorzugte Ausführungsform einer erfindungsgemäßen Vorrichtung. Die Vorrichtung umfasst einen Behälter (1) mit Verdünnungsmittel. Es sind drei Konzentratbehälter (2) vorhanden, die unterschiedliche Konzentrate enthalten. Die Konzentratbehälter (2) verfügen jeweils über eine Speichereinheit (8). Ferner gibt es einen Spülmittelbehälter (3) mit Spülmittel. Der Verdünnungsmittelbehälter (1) ist über Verdünnungsmittelleitungen mit acht Mischkammern (6) verbunden. Die Konzentratbehälter (2) sind über Konzentratleitungen ebenfalls mit den acht Mischkammern (6) verbunden. Dabei gibt es Leitungsabschnitte, die sich die drei verschiedenen Konzentrate teilen (gemeinsame Konzentratleitungen) und Leitungsabschnitte, die nur für jeweils ein Konzentrat bestimmt sind (alleinige Konzentratleitungen). Der Spülmittelbehälter (3) ist über Spülmittelleitungen ebenfalls mit den acht Mischkammern (6) verbunden. Die acht Mischkammern (6) führen jeweils zu einer Sprühdüse (7), mit der der Inhalt der Mischkammer in Tropfenform appliziert werden kann.

Es sind weitere Mischkammern vorhanden, mittels derer die verschiedenen Konzentrate miteinander vermischt werden können, bevor die Mischungen in den Mischkammern kurz vor den Auslässen mit Verdünnungsmittel verdünnt werden. Ebenso ist eine zentrale Mischkammer vorhanden, die den Mischkammern, die sich kurz vor den Auslässen befinden, vorgeschaltet ist, und über die Verdünnungsmittel einem oder mehreren Konzentraten zugeführt werden kann.

Druckregler (4) sorgen dafür, dass die Mengenströme von Konzentrat und Verdünnungsmittel entsprechend dem gewünschten Verdünnungsverhältnis und dem gewünschten Auslassmengenstrom geregelt werden.

Es ist ein Auffangbehälter (9) vorhanden, in den Restmengen aus den Leitungen gefördert werden können. Auch der Auffangbehälter (9) ist mit einer Speichereinheit (8) versehen. In den Speichereinheiten (8) sind Informationen über die in den jeweiligen Behältern enthaltenen Substanzen gespeichert.

## Patentansprüche

1. Verfahren zur Applikation eines Konzentrats in verdünnter Form, umfassend die Schritte:
- Fördern eines Konzentrats aus einem oder mehreren Konzentratbehälter(n) (2) durch eine oder mehrere Konzentratleitungen in Richtung mindestens eines Auslasses
- Verdünnen des Konzentrats mit einem Verdünnungsmittel,
- Applizieren des mit dem Verdünnungsmittel verdünnten Konzentrats
- nach einem Applikationsvorgang Zurückführen zumindest eines Teils der in den Konzentratleitungen verbliebenen Restmengen an Konzentrat in den Konzentratbehälter,
**dadurch gekennzeichnet, dass** die nach einem Applikationsvorgang in einem oder mehreren Konzentratbehälter(n) verbliebene(n) Restmenge(n) ermittelt und in eine Speichereinheit (8) geschrieben werden.

2. Verfahren nach Anspruch 1, wobei mehrere Konzentratbehälter (2) vorliegen, die unterschiedliche Konzentrate enthalten, wobei die unterschiedlichen Konzentrate über Konzentratleitungen in Richtung des mindestens einen Auslasses befördert werden können, **dadurch gekennzeichnet, dass** nach einer Applikation eines einzelnen Konzentrats, die in den Konzentratleitungen verbliebenen Restmengen des einzelnen Konzentrats in den entsprechenden Konzentratbehälter zurückgeführt werden.

3. Verfahren nach Anspruch 1, wobei mehrere Konzentratbehälter vorliegen, die unterschiedliche Konzentrate enthalten, wobei die unterschiedlichen Konzentrate über Konzentratleitungen in Richtung des mindestens einen Auslasses befördert werden können und dabei sowohl durch gemeinsame Konzentratleitungen fließen, die sie mit mindestens einem weiteren Konzentrat teilen, als auch durch alleinige Konzentratleitungen fließen, die sie mit keinem weiteren Konzentrat teilen, **dadurch gekennzeichnet, dass** nach einer Applikation von mehreren Konzentraten, die in den alleinigen Konzentratleitungen verbliebenen Restmengen des jeweiligen Konzentrats in den entsprechenden Konzentratbehälter zurückgeführt werden und optional die in den gemeinsamen Konzentratleitungen verbliebenen Restmengen an Konzentraten in einen oder mehrere Auffangbehälter befördert werden, wobei der oder die Auffangbehälter keine Konzentratbehälter sind.

4. Verfahren nach einem der Ansprüche 1 bis 3, **dadurch gekennzeichnet, dass** zur Rückführung von Konzentrat in einen Konzentratbehälter ein Spülmittel verwendet wird.

5. Verfahren nach einem der Ansprüche 1 bis 4, wobei in den Konzentratleitungen verbliebene Restmengen an Konzentrat mittels eines gasförmigen Spülmittels in den oder die Konzentratbehälter zurückgeführt werden, aus dem/denen das jeweilige Konzentrat entnommen worden ist, und anschließend die Konzentratleitungen mittels eines flüssigen Spülmittels gereinigt werden.

6. Verfahren nach einem der Ansprüche 1 bis 5, wobei zur Ermittlung der Restmengen die rückgeführten Mengen an Konzentrat berücksichtigt werden.

7. Verfahren nach einem der Ansprüche 1 oder 6, **dadurch gekennzeichnet, dass** bei der Rückführung von Konzentrat in einen Konzentratbehälter Spülmittel in den Konzentratbehälter gelangt, wobei die Menge an Spülmittel, die in den Konzentratbehälter gelangt, ermittelt wird und die durch das Spülmittel in dem Konzentratbehälter veränderte Zusammensetzung des Konzentrats ermittelt und Informationen dazu in eine Speichereinheit geschrieben werden.

8. Verfahren nach Anspruch 1 oder 7, **dadurch gekennzeichnet, dass** die Speichereinheit mit dem jeweiligen Konzentratbehälter verbunden ist.

9. Verfahren nach einem der Ansprüche 1 bis 8, **dadurch gekennzeichnet, dass** es sich bei dem Konzentrat um eine Wirkstoffformulierung handelt, die auf einem Feld, in dem Kulturpflanzen angebaut werden, appliziert wird.

10. Verfahren nach einem der Ansprüche 1 bis 9, wobei das Konzentrat ein Pflanzenschutzmittel umfasst.

11. Verfahren nach einem der Ansprüche 1 bis 10, **dadurch gekennzeichnet, dass** ein Verdünnungsmittel vorhanden ist, das einen oder mehrere Nährstoffe für Kulturpflanzen umfasst.

12. Vorrichtung zur Applikation eines Konzentrats in verdünnter Form umfassend
- mindestens einen Konzentratbehälter (2) enthaltend ein Konzentrat, oder Mittel zum Anschließen von mindestens einem Konzentratbehälter enthaltend ein Konzentrat an die Vorrichtung
- einen Behälter (1) enthaltend ein Verdünnungsmittel zum Verdünnen des mindestens einen Konzentrats
- mindestens einen Auslass
- Fördermittel zum Fördern des mindestens einen Konzentrats aus seinem Konzentratbehälter in Richtung des mindestens einen Auslasses
- eine oder mehrere Konzentratleitungen, durch die das mindestens eine Konzentrat hindurchtritt, wenn es aus seinem Konzentratbehälter in Richtung des mindestens einen Auslasses befördert wird
- Fördermittel zum Fördern des Verdünnungsmittels aus seinem Behälter (1) in Richtung des mindestens einen Auslasses
- ein Mischelement (6) zum Vermischen des mindestens einen Konzentrats mit dem Verdünnungsmittel,
wobei die Vorrichtung so ausgestaltet ist, dass nach einem Applikationsvorgang zumindest ein Teil der in den Konzentratleitungen verbliebenen Restmengen an Konzentrat in den Konzentratbehälter zurückgeführt wird, aus dem das Konzentrat entnommen worden ist, **dadurch gekennzeichnet, dass** die Vorrichtung eine Speichereinheit (8) umfasst, in der die nach einem Applikationsvorgang eines Konzentrats in dem jeweiligen Konzentratbehälter verbliebene Restmenge an Konzentrat gespeichert ist.

13. Vorrichtung nach Anspruch 12, wobei die nach dem Applikationsvorgang in den Konzentratbehälter zurückgeführte Menge an Konzentrat berücksichtigt worden ist.

14. Vorrichtung nach Anspruch 12, umfassend einen Spülmittelbehälter (3) enthaltend ein Spülmittel mit dem die nach einem Applikationsvorgang in den Konzentratleitungen verbliebenen Restmengen an Konzentrat in den entsprechenden Konzentratbehälter zurückgeführt werden können, wobei die dabei in den Konzentratbehälter gelangte Menge an Spülmittel ermittelt wird und Informationen zu dem durch diese Menge an Spülmittel im Konzentratbehälter veränderte Zusammensetzung des Konzentrats in die Speichereinheit (8) geschrieben wird.

15. Verwendung einer Vorrichtung gemäß einem der Ansprüche 12 bis 14 im Bereich der Landwirtschaft, insbesondere zur Behandlung von Kulturpflanzen oder landwirtschaftlich genutzter Flächen mit Pflanzenschutzmitteln und/oder Nährstoffen.

## Claims

1. A method for application of a concentrate in diluted form, comprising the following steps:
- transporting a concentrate from one or a plurality of concentrate containers (2) through one or a plurality of concentrate lines in the direction of at least one outlet,
- diluting the concentrate with a diluent,
- applying the concentrate diluted with the diluent,
- after an application, recycling at least a portion of the residual amounts of concentrate remaining in the concentrate lines to the concentrate container,
wherein the residual amount or amounts remaining in one or a plurality of concentrate containers after an application are determined and written into a memory unit (8).

2. The method according to claim 1, where there are a plurality of concentrate containers (2) containing different concentrates, where the different concentrates can be transported via concentrate lines in the direction of the at least one outlet, wherein after an application of an individual concentrate, the residual amounts of the individual concentrate remaining in the concentrate lines are recycled to the corresponding concentrate container.

3. The method according to claim 1, where there are a plurality of concentrate containers containing different concentrates, where the different concentrates can be transported via concentrate lines in the direction of the at least one outlet and can flow both through joint concentrate lines that they share with at least one further concentrate and through individual concentrate lines that they do not share with any further concentrate, wherein after an application of a plurality of concentrates, the residual amounts of the respective concentrate remaining in the individual concentrate lines are recycled to the corresponding concentrate container, and the residual amounts of concentrate remaining in the joint concentrate lines are optionally transported into one or a plurality of collecting containers, where the collecting container or containers are not concentrate containers.

4. The method according to any of claims 1 to 3, wherein a flushing agent is used for recycling concentrate to a concentrate container.

5. The method according to any of claims 1 to 4, where residual amounts of concentrate remaining in the concentrate lines are recycled by means of a gaseous flushing agent to the concentrate container (s) from which the respective concentrate was removed, and the concentrate lines are then cleaned by means of a liquid flushing agent.

6. The method according to any of claims 1 to 5, where the recycled amounts of concentrate are taken into consideration in determining the residual amounts.

7. The method according to either of claims 1 and 6, wherein in recycling concentrate to a concentrate container, flushing agent gets into the concentrate container, where the amount of flushing agent that gets into the concentrate container is determined and the composition of the concentrate in the concentrate container that has been modified by the flushing agent is determined and data thereon are written into a memory unit.

8. The method according to claim 1 or 7, wherein the memory unit is connected to the respective concentrate container.

9. The method according to any of claims 1 to 8, wherein the concentrate is an active ingredient formulation that is applied to a field in which cultivated plants are grown.

10. The method according to any of claims 1 to 9, where the concentrate comprises a plant protection agent.

11. The method according to any of claims 1 to 10, wherein a diluent is present that comprises one or a plurality of nutrients for cultivated plants.

12. A device for application of a concentrate in diluted form, comprising
- at least one concentrate container (2) containing a concentrate,
or means for connecting at least one concentrate container containing a concentrate to the device,
- a container (1) containing a diluent for diluting the at least one concentrate,
- at least one outlet,
- transporting means for transporting the at least one concentrate from its concentrate container in the direction of the at least one outlet,
- one or a plurality of concentrate lines through which the at least one concentrate passes when it is transport from its concentrate container in the direction of the at least one outlet,
- transporting means for transporting the diluent from its container (1) in the direction of the at least one outlet,
- a mixing element (6) for mixing the at least one concentrate with the diluent,
where the device is configured such that after an application, at least a portion of the residual amounts of concentrate remaining in the concentrate lines is recycled to the concentrate container from which the concentrate was removed, wherein the device comprises a memory unit (8) in which the residual amount of concentrate remaining in the respective concentrate container after an application of a concentrate is stored.

13. The device according to claim 12, where the amount of concentrate recycled to the concentrate container after the application was taken into consideration.

14. The device according claim 12, comprising a flushing agent container (3) containing a flushing agent by means of which the residual amounts of concentrate remaining in the concentrate lines after an application can be recycled to the corresponding concentrate container, where the amount of flushing agent which has got into the concentrate container is determined and data on the composition of the concentrate that has been modified by this amount of flushing agent in the concentrate container are written into the memory unit (8).

15. The use of a device according to any of claims 12 to 14 in the area of agriculture, in particular for treating cultivated plants or agriculturally utilized areas with plant protection agents and/or nutrients.

## Revendications

1. Procédé pour l'application d'un concentré sous forme diluée, comprenant les étapes suivantes :
- refoulement d'un concentré provenant d'un ou plusieurs récipients de concentré (2) par une ou plusieurs conduites de concentré dans la direction d'au moins une sortie,
- dilution du concentré avec un diluant,
- application du concentré dilué avec le diluant,
- après une opération d'application, renvoi d'au moins une partie des quantités résiduelles de concentré restant dans les conduites de concentré dans le récipient de concentré,
**caractérisé en ce que**
l'on détermine la ou les quantités restant après l'opération d'application dans un ou plusieurs récipients de concentré, et on les enregistre dans une unité de stockage (8).

2. Procédé selon la revendication 1, dans lequel on a plusieurs récipients de concentré (2), qui contiennent différents concentrés, les différents concentrés pouvant être transportés par des conduites de concentré dans la direction de l'au moins une sortie, **caractérisé en ce que**, après application d'un concentré unique, les quantités résiduelles du concentré unique, restant dans les conduites de concentré, sont renvoyées dans le récipient de concentré correspondant.

3. Procédé selon la revendication 1, dans lequel on a plusieurs récipients de concentré, qui contiennent des concentrés différents, les concentrés différents pouvant être transportés par des conduites de concentré dans la direction de l'au moins une sortie, et s'écoulent alors tant par des conduites de concentré communes, qu'ils partagent avec au moins un autre concentré, que par des conduites de concentré uniques, qu'ils ne partagent avec aucun autre concentré, **caractérisé en ce que**, après une application de plusieurs concentrés, les quantités résiduelles de chaque concentré, restant dans les conduites de concentré uniques, sont renvoyées dans le récipient de concentré correspondant, et éventuellement les quantités résiduelles de concentrés, restant dans les conduites de concentré communes, sont envoyées dans un ou plusieurs récipients récepteurs, le ou les récipients récepteurs n'étant pas des récipients de concentré.

4. Procédé selon l'une des revendications 1 à 3, **caractérisé en ce qu'**on utilise un agent de rinçage pour renvoyer le concentré dans un récipient de concentré.

5. Procédé selon l'une des revendications 1 à 4, dans lequel les quantités résiduelles de concentré restant dans les conduites de concentré sont renvoyées à l'aide d'un agent de rinçage gazeux dans le ou les récipients de concentré, desquels le concentré considéré a été prélevé, les conduites de concentré étant ensuite nettoyées avec un agent de rinçage liquide.

6. Procédé selon l'une des revendications 1 à 5, dans lequel, pour déterminer les quantités résiduelles, on prend en compte les quantités renvoyées du concentré.

7. Procédé selon l'une des revendications 1 ou 6, **caractérisé en ce que**, lors du renvoi du concentré dans un récipient de concentré, l'agent de rinçage arrive dans le récipient de concentré, ce à l'occasion de quoi on détermine la quantité d'agent de rinçage arrivant dans le récipient de concentré, et on détermine la composition du concentré, modifiée par l'agent de rinçage dans le récipient de concentré, et on enregistre les informations correspondantes dans une unité de stockage.

8. Procédé selon la revendication 1 ou 7, **caractérisé en ce que** l'unité de stockage est reliée au récipient de concentré correspondant.

9. Procédé selon l'une des revendications 1 à 8, **caractérisé en ce que** le concentré est une formulation de matières actives qui est appliquée sur un champ dans lequel sont cultivées des plantes de culture.

10. Procédé selon l'une des revendications 1 à 9, dans lequel le concentré comprend un agent phytosanitaire.

11. Procédé selon l'une des revendications 1 à 10, **caractérisé en ce qu'**un diluant est présent, qui comprend un ou plusieurs nutriments pour des plantes de culture.

12. Dispositif pour l'application d'un concentré sous forme diluée, comprenant
- au moins un récipient de concentré (2) contenant un concentré, ou un moyen pour raccorder au dispositif au moins un récipient de concentré contenant un concentré,
- un récipient (1), contenant un diluant pour diluer l'au moins un concentré,
- au moins une sortie,
- un moyen de refoulement pour envoyer l'au moins un concentré du récipient de concentré dans la direction d'au moins une sortie,
- une ou plusieurs conduites de concentré, par lesquelles passe l'au moins un concentré lorsqu'il est refoulé à partir de son récipient de concentré dans la direction de l'au moins une sortie,
- un moyen de refoulement pour refouler le diluant à partir du récipient (1) dans la direction de l'au moins une sortie,
- un élément mélangeur (6), pour mélanger l'au moins un concentré avec le diluant,
le dispositif étant conçu de telle sorte que, après une opération d'application, au moins une partie des quantités résiduelles de concentré restant dans les conduites de concentré soit renvoyée dans le récipient de concentré, à partir duquel le concentré peut être prélevé, **caractérisé en ce que** le dispositif comprend une unité de stockage (8) dans laquelle est stockée la quantité résiduelle de concentré restant dans le récipient de concentré correspondant après une opération d'application d'un concentré.

13. Dispositif selon la revendication 12, dans lequel on prend en compte la quantité de concentré renvoyée dans le récipient de concentré après l'opération d'application.

14. Dispositif selon la revendication 12, comprenant un récipient d'agent de rinçage (3) contenant un agent de rinçage à l'aide duquel les quantités résiduelles du concentré restant dans les conduites de concentré après l'opération d'application pouvant être renvoyées dans le récipient de concentré correspondant, ce à l'occasion de quoi on détermine la quantité d'agent de rinçage arrivant dans le récipient de concentré et on enregistre dans l'unité de stockage (8) les informations sur la composition du concentré, modifiée par cette quantité d'agent de rinçage dans le récipient de concentré.

15. Utilisation d'un dispositif selon l'une des revendications 12 à 14 dans le domaine de l'agriculture, en particulier pour le traitement de plantes de culture ou de surfaces à usage agricole, à l'aide d'agents phytosanitaires et/ou de nutriments.
